# EUROPÄISCHE PATENTSCHRIFT

(11) **EP 1 751 405 B1**
(45) Veröffentlichungstag und Bekanntmachung des Hinweises auf die Patenterteilung: **26.09.2007**
(21) Anmeldenummer: 05741889.9
(22) Anmeldetag: 18.05.2005
(51) Int. Cl.: F01M 11/00

(54) **ÖLWANNENANORDNUNG**
OIL PAN ARRANGEMENT
DISPOSITIF CARTER D'HUILE

(30) Priorität: 18.05.2004 DE 102004024517
(43) Veröffentlichungstag der Anmeldung: 14.02.2007
(73) Patentinhaber: GM Global Technology Operations, Inc., Detroit, MI 48265-3000 (US)
(72) Erfinder: BICKER, Wolf-Dietrich, 65468 Trebur (DE); EICHERT, Peter, 67663 Kaiserslautern (DE); LÖHNERT, Torsten, 65835 Liederbach (DE)
(74) Vertreter: Strauss, Peter
(86) Internationale Anmeldenummer: PCT/EP2005/005416
(87) Internationale Veröffentlichungsnummer: WO 2005/113948

(56) Entgegenhaltungen:
- DE-A1- 10 026 113
- GB-A- 2 305 467
- US-A- 4 479 463
- US-A- 6 041 752

## Beschreibung

Die Erfindung betrifft eine Ölwannenanordnung für eine Brennkraftmaschine mit einem Deckelteil, einem Bodenteil für den Ölsumpf und mindestens einem Saugrohr, das in einem Ansaugbereich des Bodenteils mündet, wobei das Saugrohr einstückig mit dem Ansaugbereich und dem Bodenteil verbunden ist.

Gemäß der DE 40 10 946 A1 ist eine Ölwanne für eine Brennkraftmaschine mit einem flachen Bodenteil sowie einem tiefen Wannenabschnitt für den Ölsumpf und einem in den tiefen Wannenabschnitt einmündenden Saugrohr einer Ölpumpe beschrieben, wobei der tiefe Wannenabschnitt als abnehmbarer Öltopf ausgebildet ist. Das Saugrohr, das mittels Schraubverbindungen an der Ölwanne befestigt ist, ist an seinem unteren Ende glockenförmig ausgebildet und mit einem Sieb versehen, das bei montiertem Öltopf geringfügig beabstandet zum Öltopfboden ist.

Aus der US 38 12 400 ist eine Brennkraftmaschine mit einer Ölwanne beschrieben, in der das aus den Kühl- und Schmierkreisläufen der Brennkraftmaschine zurückfließende Öl gesammelt wird. Hierbei endet ein von einer Ölpumpe der Brennkraftmaschine in die Ölwanne der Brennkraftmaschine über einen Saugtrichter auslaufende Saugrohr in der Mitte der Ölwanne kurz oberhalb des Ölwannenbodens. Einer der Nachteile dieser bekannten Vorrichtungen ist der hohe Montageaufwand aufgrund der Vielzahl von einzelnen Bauteilen. Das Saugrohr beispielsweise muss an diversen Punkten befestigt werden (z.B. durch Schraubverbindungen) sowie gegen Leckage abgedichtet werden. Hieraus ergibt sich eine hohe Anzahl an Montagevorgängen, welches sich negativ auf die Kosten der Ölwannenanordnung auswirkt. Des Weiteren sind die Strömungsverhältnisse des anzusaugenden Öls im Ansaugbereich des Saugrohres bei den bekannten Ölwannenanordnungen nicht zufrieden stellend.

Aus der DE 100 26 113 A1 ist eine Brennkraftmaschine mit einem zwischen Kurbelraum und Ölwanne angeordnetem Ölabweisteil bekannt. Das Ölabweisteil ist mit Ölkanälen versehen, welche die im Zylinderkurbelgehäuse verlaufenden und bis zu einem Spalt führenden Ölkanäle zum Ölreservoir der Ölwanne fortsetzen. Diese Ölkanäle können Öldrucklaufkanäle oder auch Ölsaugkanäle sein. Dabei kann das Ölabweisteil mit seinen Kanälen als Komplettteil hergestellt sein. Auch hier ergibt sich nachteilig, dass die Strömungsverhältnisse des anzusaugenden Öls im Ansaufbereich des Saugrohres nicht zufrieden stellend sind.

Zum allgemeinen technischen Verständnis wird noch auf die DE 40 11 759 A1 verwiesen.

Es ist Aufgabe der vorliegenden Erfindung, eine Ölwannenanordnung bereitzustellen, mit der die oben genannten Nachteile vermieden werden, insbesondere eine Ölwannenanordnung geschaffen wird, die ein geringes Gewicht, bessere Strömungsverhältnisse für das anzusaugende Öl sowie einen geringen Montageaufwand aufweist.

Die Aufgabe wird durch eine Ölwannenanordnung mit den Merkmalen des Anspruchs 1 gelöst. In den abhängigen Ansprüchen sind bevorzugte Weiterbildungen der erfindungsgemäßen Ölwannenanordnung angegeben.

Es ist erfindungsgemäß vorgesehen, dass das Saugrohr einstückig mit dem Ansaugbereich und dem Bodenteil verbunden ist, wobei der Ansaugbereich einen Wandbereich aufweist, der mindestens ein Ansaugfenster umfasst. Durch die einstückige Ausführungsform der Ölwannenanordnung wird eine kompakte Bauweise erzielt, welches gleichzeitig ein Gewichts- und Kostenersparnis darstellt. Fehlmontagen des Werkers bezüglich des Saugrohres, wodurch eventuelle Leckagen auftreten können, werden durch die erfindungsgemäße Anordnung weitestgehend ausgeschlossen. Das Bodenteil kann beispielsweise ein Druckgussteil aus Metall oder ein Spritzgussteil aus Kunststoff sein.

Bei einer erfindungsgemäßen Ausführungsform der Ölwannenanordnung weist der Ansaugbereich einen Wandbereich auf, der mindestens ein Ansaugfenster umfasst. Eine Ölpumpe, die beispielsweise eine Zahnradpumpe, eine Sichelpumpe oder eine Rotorpumpe sein kann, sorgt am Mündungsbereich des Saugrohres (am Ansaugbereich) für einen Unterdruck, wodurch das sich im Bodenteil befindende Öl (Ölsumpf) durch das Ansaugfenster in den Ansaugbereich und somit in das Saugrohr strömt. Selbstverständlich ist es möglich, den Wandbereich mit mehreren Ansaugfenstern auszubilden. Das angesaugte Öl strömt durch das Saugrohr, durch die Ölpumpe und erreicht insbesondere die einzelnen Motorschmierstellen, wie z.B. das Kugelwellenlager, das Pleuellager, den Stößel, das Nockenwellenlager etc. Hierbei ist es wichtig, dass die einzelnen Stellen mit ausreichend viel Öl versorgt werden, um insbesondere den erforderlichen Schmier-, Kühl- und Motorgeräuschdämpfungseffekt zu erzielen.

Vorzugsweise umfasst der Ansaugbereich eine Deckeleinheit, so dass das anzusaugende Öl lediglich durch die Ansaugfenster in den Ansaugbereich und somit in das Ansaugrohr strömen kann. Durch die Deckeleinheit wird insbesondere bewirkt, dass keine Luft aufgrund des wirkenden Unterdruckes im Ansaugbereich während der Förderung des Öls mit angesaugt wird, welches sich nachteilig für die Motorschmierung auswirken würde. Die Deckeleinheit liegt hierbei unmittelbar auf dem Wandbereich des Ansaugbereiches auf, so dass lediglich das Öl über die Ansaugfenster in das Ansaugrohr strömen kann. Eine Art Strudelwirkung mit einer gleichzeitigen Bereicherung von Luft in das Öl wird somit im Ansaugbereich wirksam verhindert.

In einer Ausführungsalternative kann der Wandbereich im Wesentlichen zylinderförmig ausgebildet sein. In einer anderen Alternative ist eine quaderförmige Ausgestaltung des Wandbereichs ebenfalls möglich, wobei weitere geometrische Ausgestaltungen selbstverständlich ebenfalls denkbar sind.

Zweckmäßigerweise umfasst der Wandbereich einen ersten und einen zweiten Wandabschnitt, die durch ein erstes und eine zweites Ansaugfenster getrennt bzw. beabstandet sind. Hierbei kann der erste Wandabschnitt mit dem Ansaugrohr einstückig verbunden sein. Die Deckeleinheit ist vorzugsweise formschlüssig und/oder kraftschlüssig mit dem Wandbereich verbunden, das bedeutet, dass die Deckeleinheit auf dem Wandbereich derart aufliegt, ohne das Öl zwischen der Deckeleinheit und dem Wandbereich eindringen kann.

Vorzugsweise weist der Ansaugbereich Führungsmittel zum Führen des Öls in den Ansaugkanal auf. Hierbei können die Führungsmittel beispielsweise an der Deckeleinheit angeordnet sein. In einer Alternative der Erfindung sind die Führungsmittel als Führungskanäle ausgebildet, die die Ölströmung vom jeweiligen Ansaugfenster zum Ansaugkanal führen. Die Führungsmittel bewirken ein verbessertes Ansaugverhalten des Öls, wobei gleichzeitig entstehende Druckverluste gering gehalten werden können.

Bei einer weiteren Ausführungsform der Erfindung verschließt die Deckeleinheit zumindest teilweise das/die Ansaugfenster. In Abhängigkeit von den jeweiligen Anforderungen der Motorschmierung sind unterschiedliche Öffnungsgrößen des Ansaugfensters denkbar.

Vorzugsweise ist die Deckeleinheit einstückig mit dem Deckelteil verbunden. Während der Montage der Ölwannenanordnung kann das Deckelteil beispielsweise über Schraubverbindungen am Bodenteil befestigt werden, wobei gleichzeitig die Deckeleinheit am Ansaugbereich positioniert wird, ohne dass zusätzliche Montageschritte hierbei erforderlich sind. Selbstverständlich ist es denkbar, die Deckeleinheit als ein separates Bauteil auszubilden. Zweckmäßigerweise sind die Deckeleinheit und/oder das Deckelteil ein Spritzgussteil aus Kunststoff. Die Deckeleinheit sowie das Deckelteil aus Metall auszubilden ist ebenfalls möglich.

Vorzugsweise weist das Deckelteil Öffnungen auf, durch die das Öl in das Bodenteil fließt. Das von der Motorschmierung zurücktropfende Öl trifft zunächst auf das Deckelteil und gelangt von dort über diverse Öffnungen in das Bodenteil. Hierdurch wird insbesondere bezweckt, dass sich das Öl zunächst beruhigt, bevor es über den Saugkanal zur Motorschmierung geleitet wird.

Weitere Vorteile, Merkmale und Einzelheiten der Erfindung ergeben sich aus der nachfolgenden Beschreibung, in der unter Bezugnahme auf die Zeichnungen verschiedene Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.

In den Zeichnungen zeigt:
- Fig. 1: die erfindungsgemäße Ölwannenanordnung in Explosionsdarstellung mit einem Deckelteil und einem Bodenteil;
- Fig. 2: eine Schnittdarstellung der Ölwannenanordnung im zusammengebauten Zustand;
- Fig. 3: eine vergrößerte Darstellung des Ansaugbereichs;
- Fig. 4: eine dreidimensionale Darstellung einer Deckeleinheit mit Führungskanälen und
- Fig. 5: eine vergrößerte Darstellung des Ansaugbereichs mit Deckeleinheit und einem Wandbereich des Ansaugbereichs.

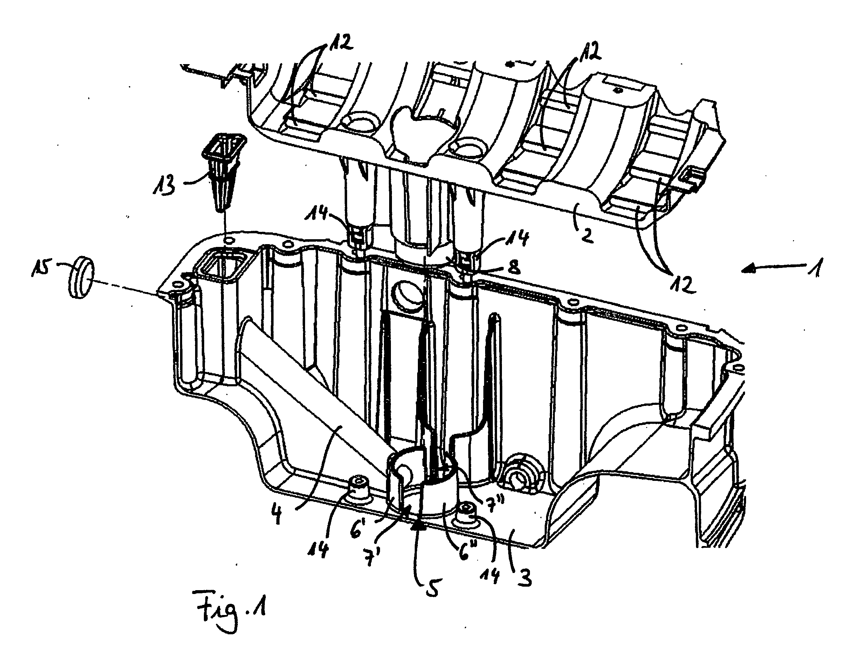

Fig. 1 zeigt eine erfindungsgemäße Ölwannenanordnung 1 für eine Brennkraftmaschine mit einem Deckelteil 2 und einem Bodenteil 3. Das Bodenteil 3 ist mit einem Saugrohr 4 ausgebildet, welches mit einem Ende an einem Ansaugbereich 5 des Bodenteils 3 mündet. Im Bodenteil 3 der Ölwannenanordnung 1 befindet sich das Öl, welches für die Motorschmierung verwendet wird. Besonders vorteilhaft ist, dass das Saugrohr 4 einstückig mit dem Ansaugbereich 5 und dem Bodenteil 3 verbunden ist. Der Ansaugbereich 5 weist einen ersten 6' und einen zweiten Wandabschnitt 6'' auf, wobei beide Wandabschnitte 6', 6" durch ein erstes 7' und ein zweites Ansaugfenster 7'' beabstandet sind. Wie Fig. 1 deutlich zeigt, ist der Wandbereich 6', 6'' im Wesentlichen zylinderförmig ausgebildet. Hierbei ist der erste Wandabschnitt 6' mit dem Ansaugrohr 4 einstückig verbunden.

Das Deckelteil 2 weist eine Vielzahl von Öffnungen 12 auf, durch die das Öl nach der Motorschmierung wieder in den Ölsumpf des Bodenteils 3 gelangt. Des Weiteren ist das Deckelteil 2 einstückig mit einer Deckeleinheit 8 verbunden, die im zusammengesetzten Zustand der Ölwannenanordnung 1 dichtend auf dem Wandbereich 6', 6'' aufliegt, so dass lediglich eine Strömung des Öls durch die Ansaugfenster 7', 7'' in das Ansaugrohr 4 möglich ist. Im vorliegenden Ausführungsbeispiel wird das Deckelteil 2 mit dem Bodenteil 3 durch Schraubverbindungen 14 befestigt. Alternative kraftschlüssige/formschlüssige Verbindungen sind selbstverständlich möglich.

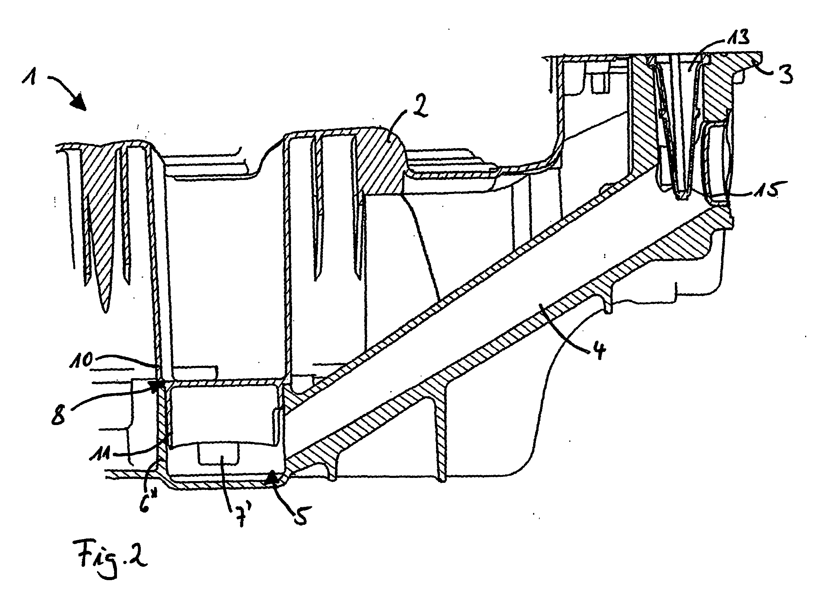

Das Ansaugrohr 4 ist im vorliegenden Ausführungsbeispiel konusförmig ausgebildet, das bedeutet, dass der Durchmesser des Saugrohres 4 an der Mündung am Ansaugbereich 5 einen geringeren Durchmesser aufweist als an der dem Ansaugbereich 5 gegenüberliegenden Seite, an der eine Filtereinheit 13 angeordnet ist (siehe Fig. 2). Die konusförmige Ausgestaltung des Saugrohres 4 ist durch die Fertigung bedingt. Wird das Bodenteil 2 durch ein Druckgussverfahren hergestellt, wird die geometrische Form des Saugrohres 4 durch einen Schieber gebildet, der am Ende des Druckgussverfahrens aus dem sich gebildeten Saugrohr 4 herausgezogen wird. Um das Saugrohr 4 an der dem Ansaugbereich 5 gegenüberliegenden Seite abzudichten, kommt eine Abdichtelement 15 (Stopfen) zum Einsatz, welches kraftschlüssig und / oder formschlüssig und / oder stoffschlüssig mit dem Bodenteil 3 verbunden sein kann. Bei dem Filter 13 kann es sich beispielsweise um einen Grobfilter handeln, der z.B. aus Kunststoff besteht. Dieser Filter 13 siebt zunächst größere Partikel aus dem zu befördernden Ölstrom. Eine weitere Feinfilterung erfolgt in einem nicht dargestellten zweiten Filter, dessen Filterelemente vorzugsweise aus Papier oder Faserstofffüllungen bestehen können.

Fig. 2 zeigt des Weiteren am Ansaugbereich 5 den zweiten Wandabschnitt 6'' sowie das Ansaugfenster 7'. Der Ansaugbereich 5 ist hierbei durch die Deckeleinheit 8 von oben zuverlässig abgeschlossen. Hierbei weist die Deckeleinheit 8 einen oberen 10 und einen unteren Bereich 11 auf, wobei der obere Bereich 10 einen größeren Durchmesser aufweist als der untere Bereich 11. Der untere Bereich 11 ragt in den Ansaugbereich 5 in Richtung Bodenteil 3 hinein, wobei der obere Bereich 10 auf dem Wandbereich 6', 6'' aufliegt. Im gezeigten Ausführungsbeispiel befindet sich die Deckeleinheit 8 im leichten Presssitz mit dem Wandbereich 6' 6''.

Wie Fig. 2 ebenfalls verdeutlicht, wird durch die Deckeleinheit 8 ein Teil des Ansaugfensters 7' verdeckt. Das als Druckgussteil ausgebildete Bodenteil 3 kann beispielsweise aus einem Material bestehen, das Aluminium und / oder Magnesium umfasst. In einer weiteren nicht dargestellten Ausführungsform ist es ebenfalls möglich, das Bodenteil 3 als Spritzgussteil aus Kunststoff herzustellen. Die Deckeleinheit 8, die im vorliegenden Beispiel einstückig mit dem Deckelteil 2 verbunden ist, kann als Spritzgussteil aus Kunststoff oder aus einem Metall bestehen.

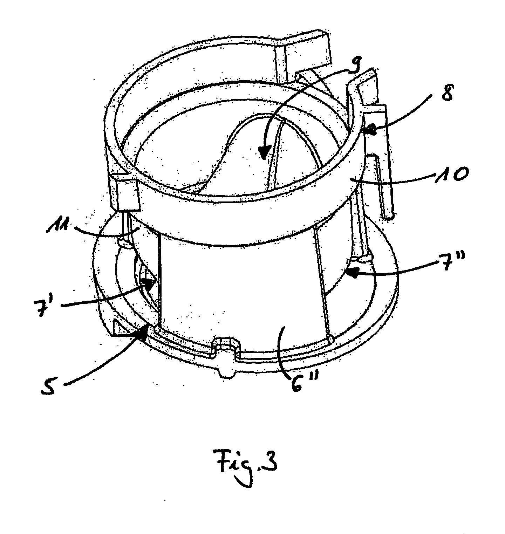

Fig. 3 zeigt den Ansaugbereich 5 mit den Wandbereichen 6', 6'' und den Ansaugfenstern 7', 7''. Die Ansaugfenster 7', 7'' sind teilweise durch den unteren Bereich 10 der Deckeleinheit 8 verdeckt, so dass ein definierter Öldurchsatz durch die Ansaugfenster 7', 7'' in Richtung des Saugrohres 4 entsteht. Die Deckeleinheit 8 gemäß Fig. 3 ist im oberen Bereich 10 in einer Schnittansicht dargestellt, um den Ansaugbereich 5 innerhalb der Wandbereiche 6', 6'' zu verdeutlichen.

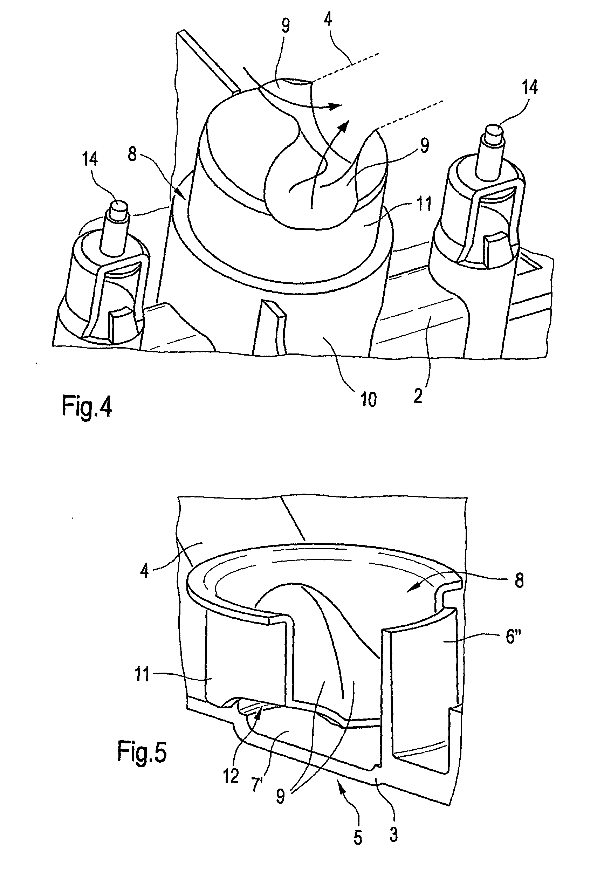

Um eine zufrieden stellende Strömung des Öls vom Ölsumpf durch die Ansaugfenster 7', 7'' in Richtung Saugrohr 4 zu erzielen, weist die Ölwannenanordnung 1 Führungsmittel 9 in Form von Strömungskanälen auf, die an der Deckeleinheit 8 angeordnet sind (siehe Fig. 3, 4, 5). Die Strömungskanäle 9 erstrecken sich vom jeweiligen Ansaugfenster 7', 7'' zum Mündungsbereich des Ansaugrohres 4. Die Strömungskanäle 9 bewirken eine gezielte Führung des Ölstromes im Ansaugbereich 5, wodurch entstehende Druckverluste gering gehalten werden können. Im dargestellten Ausführungsbeispiel ist die den Ansaugfenstern 7', 7'' zugewandte Öffnung 12 der Strömungskanäle 9 zumindest teilweise ovalförmig ausgebildet.

### Bezugszeichenliste

- 1: Ölwannenanordnung
- 2: Deckeleinheit
- 3: Bodenteil
- 4: Saugrohr
- 5: Ansaugbereich
- 6': Wandbereich
- 6'': Wandbereich
- 7': Ansaugfenster
- 7'': Ansaugfenster
- 8: Deckeleinheit
- 9: Führungsmittel, Führungskanal
- 10: oberer Bereich der Deckeleinheit
- 11: unterer Bereich der Deckeleinheit
- 12: Öffnungen
- 13: Filter
- 14: Schraubverbindung
- 15: Verschließelement

## Patentansprüche

1. Ölwannenanordnung (1) für eine Brennkraftmaschine mit einem Deckelteil (2), einem Bodenteil (3) für den Ölsumpf und mindestens einem Saugrohr (4), das in einen Ansaugbereich (5) des Bodenteils (3) mündet, wobei das Saugrohr (4) einstückig mit dem Ansaugbereich (5) und dem Bodenteil (3) verbunden ist, **dadurch gekennzeichnet, dass** der Ansaugbereich (5) einen Wandbereich (6', 6'') aufweist, der mindestens ein Ansaugfenster (7', 7'') umfasst.

2. Ölwannenanordnung (1) nach Anspruch 1, **dadurch gekennzeichnet, dass** der Ansaugbereich (5) eine Deckeleinheit (8) umfasst.

3. Ölwannenanordnung (1) nach Anspruch 1 oder 2, **dadurch gekennzeichnet, dass** der Wandbereich (6', 6'') im Wesentlichen zylinderförmig ist.

4. Ölwannenanordnung (1) nach einem der genannten Ansprüche, **dadurch gekennzeichnet, dass** der Wandbereich (6', 6'') einen ersten (6') und einen zweiten Wandabschnitt (6'') umfasst, die durch ein erstes (7') und ein zweites Ansaugfenster (7") getrennt sind.

5. Ölwannenanordnung (1) nach Anspruch 4, **dadurch gekennzeichnet, dass** der erste Wandabschnitt (6') mit dem Ansaugrohr (4) einstückig verbunden ist.

6. Ölwannenanordnung (1) nach einem der genannten Ansprüche, **dadurch gekennzeichnet, dass** die Deckeleinheit (8) formschlüssig und/oder kraftschlüssig mit dem Wandbereich (6', 6'') verbunden ist.

7. Ölwannenanordnung (1) nach einem der genannten Ansprüche, **dadurch gekennzeichnet, dass** der Ansaugbereich (5) Führungsmittel (9) zum Führen des Öls in den Ansaugkanal (4) aufweist.

8. Ölwannenanordnung (1) nach Anspruch 7, **dadurch gekennzeichnet, dass** die Führungsmittel (9) an der Deckeleinheit (8) angeordnet sind.

9. Ölwannenanordnung (1) nach einem der genannten Ansprüche, **dadurch gekennzeichnet, dass** die Deckeleinheit (8) einen oberen (10) und einen unteren Bereich (11) aufweist, wobei der obere Bereich (10) einen größeren Durchmesser aufweist als der untere Bereich (11).

10. Ölwannenanordnung (1) nach Anspruch 9, **dadurch gekennzeichnet, dass** die Deckeleinheit (8) zumindest teilweise das/die Ansaugfenster (7', 7'') verschließt.

11. Ölwannenanordnung (1) nach einem der genannten Ansprüche, **dadurch gekennzeichnet, dass** die Deckeleinheit (8) einstückig mit dem Deckelteil (2) verbunden ist.

12. Ölwannenanordnung (1) nach einem der genannten Ansprüche, **dadurch gekennzeichnet, dass** das Deckelteil (2) und/oder die Deckeleinheit (8) ein Spritzgussteil aus Kunststoff sind.

13. Ölwannenanordnung (1) nach einem der genannten Ansprüche, **dadurch gekennzeichnet, dass** das Bodenteil (3) ein Druckgussteil aus Metall oder ein Spritzgussteil aus Kunststoff ist.

14. Ölwannenanordnung (1) nach Anspruch 13, **dadurch gekennzeichnet, dass** das Bodenteil (3) aus einem Material besteht, das Aluminium und/oder Magnesium umfasst.

15. Ölwannenanordnung (1) nach einem der genannten Ansprüche, **dadurch gekennzeichnet, dass** das Deckelteil (2) Öffnungen (12) aufweist, durch die das Öl in das Bodenteil (3) fließt.

16. Ölwannenanordnung (1) nach einem der genannten Ansprüche, **dadurch gekennzeichnet, dass** an der dem Ansaugbereich (5) gegenüberliegenden Seite des Saugrohres (4) ein Filter (13) angeordnet ist.

17. Kraftfahrzeug mit einer Ölwannenanordnung (1) nach einem der genannten Ansprüche.

## Claims

1. An oil sump assembly (1) for an internal-combustion engine including a cover part (2), a bottom part (3) for the oil sump and at least one suction pipe (4) which opens out into an suction region (5) of the bottom part (3), wherein the suction pipe (4) is connected in one piece manner to the suction region (5) and the bottom part (3), **characterised in that** the suction region (5) comprises a wall portion (6', 6") which incorporates at least one suction window (7',7'').

2. An oil sump assembly (1) in accordance with Claim 1, **characterised in that** the suction region (5) comprises a cover unit (8).

3. An oil sump assembly (1) in accordance with Claim 1 or 2, **characterised in that** the wall portion (6', 6") is substantially cylindrical.

4. An oil sump assembly (1) in accordance with any of the previous Claims, **characterised in that** the wall portion (6', 6'') incorporates a first (6') and a second wall section (6'') which are separated by a first (7') and a second suction window (7'').

5. An oil sump assembly (1) in accordance with Claim 4, **characterised in that** the first wall section (6') is connected to the suction pipe (4) in one piece manner.

6. An oil sump assembly (1) in accordance with any of the previous Claims, **characterised in that** the cover unit (8) is connected to the wall portion (6', 6'') in positive and/or non-positive manner.

7. An oil sump assembly (1) in accordance with any of the previous Claims, **characterised in that** the suction region (5) comprises guidance means (9) for guiding the oil into the suction channel (4).

8. An oil sump assembly (1) in accordance with Claim 7, **characterised in that** the guidance means (9) are arranged on the cover unit (8).

9. An oil sump assembly (1) in accordance with any of the previous Claims, **characterised in that** the cover unit (8) comprises an upper (10) and a lower region (11), wherein the upper region (10) has a greater diameter than the lower region (11).

10. An oil sump assembly (1) in accordance with Claim 9, **characterised in that** the cover unit (8) at least partially closes the suction window or windows (7', 7'').

11. An oil sump assembly (1) in accordance with any of the previous Claims, **characterised in that** the cover unit (8) is connected to the cover part (2) in one piece manner.

12. An oil sump assembly (1) in accordance with any of the previous Claims, **characterised in that** the cover part (2) and/or the cover unit (8) is an injection moulded part of synthetic material.

13. An oil sump assembly (1) in accordance with any of the previous Claims, **characterised in that** the bottom part (3) is a pressure die cast part made of metal or an injection moulded part of synthetic material

14. An oil sump assembly (1) in accordance with Claim 13, **characterised in that** the bottom part (3) consists of a material which comprises aluminium and/or magnesium.

15. An oil sump assembly (1) in accordance with any of the previous Claims, **characterised in that** the cover part (2) comprises openings (12) through which the oil flows into the bottom part (3).

16. An oil sump assembly (1) in accordance with any of the previous Claims, **characterised in that** a filter (13) is arranged at the opposite end of the suction pipe (4) to the suction region (5).

17. A motor vehicle comprising an oil sump assembly (1) in accordance with any of the previous Claims.

## Revendications

1. Dispositif de carter d'huile (1) pour moteur à combustion interne, comportant un élément couvercle (2), un élément de fond (3) pour le carter à huile, et au moins un tuyau d'aspiration (4) qui débouche dans une zone d'aspiration (5) de l'élément de fond (3), le tuyau d'aspiration (4) étant relié d'un seul tenant à la zone d'aspiration (5) et à l'élément de fond (3), **caractérisé en ce que** la zone d'aspiration (5) présente une zone de paroi (6', 6") qui comprend au moins une fenêtre d'aspiration (7', 7").

2. Dispositif de carter d'huile (1) selon la revendication 1, **caractérisé en ce que** la zone d'aspiration (5) comprend une unité de couvercle (8).

3. Dispositif de carter d'huile (1) selon la revendication 1 ou 2, **caractérisé en ce que** la zone de paroi (6', 6") est de forme sensiblement cylindrique.

4. Dispositif de carter d'huile (1) selon l'une des revendications précédentes, **caractérisé en ce que** la zone de paroi (6', 6") comprend une première (6') et une deuxième (6") sections de paroi qui sont séparées au moyen d'une première (7') et d'une deuxième (7") fenêtres d'aspiration.

5. Dispositif de carter d'huile (1) selon la revendication 4, **caractérisé en ce que** la première section de paroi (6') est reliée d'un seul tenant au tuyau d'aspiration (4).

6. Dispositif de carter d'huile (1) selon l'une des revendications précédentes, **caractérisé en ce que** l'unité de couvercle (8) est reliée par conjugaison de forme et/ou par adhérence à la zone de paroi (6', 6").

7. Dispositif de carter d'huile (1) selon l'une des revendications précédentes, **caractérisé en ce que** la zone d'aspiration (5) présente des moyens de guidage (9) pour guider l'huile dans le canal d'aspiration (4).

8. Dispositif de carter d'huile (1) selon la revendication 7, **caractérisé en ce que** les moyens de guidage (9) sont disposés au niveau de l'unité de couvercle (8).

9. Dispositif de carter d'huile (1) selon l'une des revendications précédentes, **caractérisé en ce que** l'unité de couvercle (8) présente une zone supérieure (10) et une zone inférieure (11), la zone supérieure (10) ayant un diamètre plus important que la zone inférieure (11).

10. Dispositif de carter d'huile (1) selon la revendication 9, **caractérisé en ce que** l'unité de couvercle (8) ferme au moins en partie la ou les fenêtres d'aspiration (7', 7").

11. Dispositif de carter d'huile (1) selon l'une des revendications précédentes, **caractérisé en ce que** l'unité de couvercle (8) est reliée d'un seul tenant à l'élément couvercle (2).

12. Dispositif de carter d'huile (1) selon l'une des revendications précédentes, **caractérisé en ce que** l'élément couvercle (2) et/ou l'unité de couvercle (8) sont des pièces moulées par injection en matière plastique.

13. Dispositif de carter d'huile (1) selon l'une des revendications précédentes, **caractérisé en ce que** l'élément de fond (3) est une pièce moulée sous pression en métal ou une pièce moulée par injection en matière plastique.

14. Dispositif de carter d'huile (1) selon la revendication 13, **caractérisé en ce que** l'élément de fond (3) est constitué d'un matériau qui comprend de l'aluminium et/ou du magnésium.

15. Dispositif de carter d'huile (1) selon l'une des revendications précédentes, **caractérisé en ce que** l'élément couvercle (2) présente des ouvertures (12) par lesquelles l'huile circule dans l'élément de fond (3).

16. Dispositif de carter d'huile (1) selon l'une des revendications précédentes, **caractérisé en ce qu'**un filtre (13) est disposé du côté du tuyau d'aspiration (4) opposé à la zone d'aspiration (5).

17. Véhicule automobile comportant un dispositif de carter d'huile (1) selon l'une des revendications précédentes.
